(19) Europäisches Patentamt
European Patent Office
Office européen des brevets

(11) **EP 3 727 011 B1**

(12) **EUROPEAN PATENT SPECIFICATION**

(45) Date of publication and mention
of the grant of the patent:
**25.08.2021 Bulletin 2021/34**

(21) Application number: **18815241.7**

(22) Date of filing: **14.12.2018**

(51) Int Cl.:
*A23G 9/04* *(2006.01)*          *A23G 9/32* *(2006.01)*
*A23G 9/46* *(2006.01)*

(86) International application number:
**PCT/EP2018/084973**

(87) International publication number:
**WO 2019/121400 (27.06.2019 Gazette 2019/26)**

(54) **AERATED FROZEN CONFECTION**

MIT LUFT DURCHSETZTES GEFRORENES KONFEKT

CONFISERIE GLACÉE AÉRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2017 EP 17210044**

(43) Date of publication of application:
**28.10.2020 Bulletin 2020/44**

(73) Proprietor: **Unilever IP Holdings B.V.
3013 AL Rotterdam (NL)**

(72) Inventors:
• **JUDGE, Phillippa
Bedford Bedfordshire MK44 1LQ (GB)**
• **MILES, Thomas, James
Bedford Bedfordshire MK44 1LQ (GB)**
• **ROSSETTI, Damiano
Bedford Bedfordshire MK44 1LQ (GB)**

(74) Representative: **Askew, Sarah Elizabeth
Unilever PLC
Unilever Patent Group
Bronland 14
6708 WH Wageningen (NL)**

(56) References cited:
**EP-A1- 1 889 544          WO-A1-2008/110502
WO-A1-2016/016308          WO-A1-2017/125213
US-A- 3 968 266          US-A- 5 486 372**

Remarks:
The file contains technical information submitted after
the application was filed and not included in this
specification

**Description**

## TECHNICAL FIELD OF INVENTION

The present invention relates to aerated frozen confections. More specifically, the present invention provides a process for the production of an ambient stable aerated composition. The invention also provides a process for the production of an aerated frozen confection.

## BACKGROUND TO INVENTION

Traditional manufacture of frozen confections such as ice creams is set out in text books such as Ice Cream 7th Edition (H. Goff & R. Hartel) and The Science of Ice Cream 2nd Edition (C. Clarke). While consumers are very familiar with the appearance, taste and texture of ice cream, few appreciate that specific ingredients and a time-consuming, energy intensive preparation process are required to create the complex, intricate and delicate microstructure required. A typical ice cream consists of about 30% ice, 50% air, 5% fat and 15% matrix (sugar solution) by volume. It therefore contains all three states of matter: solid ice and fat, liquid sugar solution and gas. Once manufactured, ice creams are then stored in cold stores which are typically about -25°C and then distributed in a cold chain at approximately the same temperature before storage at the point of sale in freezers at approximately -18°C.

It is therefore apparent that the manufacture of standard ice requires careful control of operating parameters in order to achieve the required microstructure, including emulsion and foam properties. It also demands significant amounts of energy for the manufacture and storage of the product so that the microstructure achieved and the corresponding organoleptic properties may be retained through the supply chain of central storage, distribution to further logistic sites, subsequent transport to points of sale and then either consumption following purchase or further storage at home for consumption later. It is well known that the supply chain from the factory to the point of consumption is of very variable quality and if the temperature falls outside the optimal window then products suffer. For example, if the temperature is too low, products are unacceptably hard and organoleptic properties suffer - in addition to the wasted energy consumption. Conversely, if the temperature is too high then product quality suffers for the obvious reason of the melting of the ice and loss of the microstructure. In addition, some countries do not have adequate supply cold chains and so the consumption of frozen confectionaries in these places is greatly limited. Moreover, this careful regulation of temperature consumes energy, has significant sustainability issues, and may contribute to the generation of greenhouse gases.

It is therefore desired to provide an approach for the manufacture of frozen confections that does not require this level of control in the manufacturing and supply process and that delivers significant sustainability advantages.

The prior art has sought to address these challenges in various ways. For example, ice cream mixes have been provided in an unaerated form that are intended to be quiescently frozen in the home. However, such ice creams do not have the air or ice structure of standard ice creams, and are therefore too dense and hard, and so not have the desired organoleptic properties.

Previous attempts have been made to provide ambient stable aerated compositions that can be frozen quiescently frozen in the home to provide an aerated frozen confection. These include use of dry powder to which liquid is added to make a liquid composition (or ready-made liquid compositions) that are provided with the intent to aerate them at the point of use, prior to quiescent freezing. However, this approach lacks consistency because the typical consumer does not have the appropriate equipment in the home to successfully aerate such liquid compositions in the way required to achieve the appropriate microstructure. There is also no guarantee that the consumer will operate their equipment in the same way each time the product is aerated resulting in inconsistency between batches. Moreover, there is a great deal of variation in the equipment available to consumers to aerate the compositions and there will be high levels of variation in the microstructure achieved across the different consumers, therefore the quality of the resultant product cannot be assured. Even then the aforesaid liquid compositions must deliver an aerated composition in which the microstructure will be maintained for at least the time taken to achieve quiescent freezing in the home freezer.

The present invention has found that if an already aerated composition is provided, then this aerated composition addresses the foregoing issues. By aerating at the point of manufacture, the quality of the microstructure can be assured by using larger scale, higher throughput and more efficient commercial equipment that is more effective on a product-by-product basis than any equipment in the home. By providing such an aerated composition, a cold supply chain is no longer needed resulting in decreased energy consumption and significant sustainability benefits in addition to the benefit of providing aerated freezeble at home confectionary products where a supply cold chain is not fully developed or lacking. In addition, energy is not required for aeration at the point of use - another significant sustainability advantage.

However, it will be apparent that in order to achieve this desired product and delivery format, a suitable aerated composition must be provided that is stable in ambient temperatures but that provides a high quality frozen confection when quiescently frozen.

In view of the foregoing issues, it is therefore an object of the present invention to remove the need for aeration by the consumer by providing an improved composition that is aerated and stable under ambient conditions that can be delivered to the consumer through a normal (non-chilled) supply chain and then frozen at the point of use to provide an aerated frozen confection.

EP1889544 discloses an aqueous foam comprising gas bubbles that are stabilized by food-grade, interfacially active particles selected from the group consisting of particles made out of seeds, spices, spores, grains, sugar crystals, lamellar surfactant crystals, nutrient crystals, particles made out of protein aggregates, particles made out of polysaccharide aggregates, particles made out of protein-surfactant aggregates, particles made out of protein-polysaccharide mixtures, particles made out of polysaccharide-polysaccharide mixtures, particles made out of polysaccharide-protein phase separating mixtures, and mixtures thereof. EP1889544 asserts that said aqueous foam is suitable for the preparation of ice cream. However as demonstrated below, this is not the case.

WO 2017/125213 relates to an aqueous composition in liquid form. WO 2008/110502 relates to an aeratable as well as an aerated product. US 5,486,372 relates generally to a reduced calorie frozen dessert product.

The present invention provides improvements over the prior art and addresses the issues set out above by providing an ambient stable aerated composition that can be frozen to provide an aerated frozen confection at the point of use, rather than at the point of manufacture, thereby removing the need for a cold supply chain and/or allowing frozen confections to be sold in markets and regions with poor or no cold supply chain. Moreover, it is an aim of the invention to provide such an ambient stable aerated composition that is capable of surviving storage for several months at high temperature that are typically experienced in ambient supply chains in hotter countries (approx. 35°C in, for example Africa, Asia, and the South Americas), yet that can still be later frozen to provide a high quality frozen confection.

The present invention has surprisingly discovered a process and formulation for the production of the ambient stable aerated composition that is required for the production of an aerated frozen confection. The process requires a split stream approach in which a specific formulation is utilised to create an aerated precursor which is then combined with the remaining ingredients of the frozen confection to provide an aerated composition that is stable at high ambient temperatures and that then provides a high quality frozen confection when frozen.

SUMMARY OF INVENTION

In a first aspect, the present invention provides a process for the preparation of an ambient stable edible aerated composition suitable for the production of an aerated frozen confection comprising the steps of

- providing an aqueous solution comprising

  ○ water and
  ○ from 50 to 75 wt% (by weight of the aqueous solution) of a soluble sugar
  ○ from 1.25 to 5 wt% (by weight of the aqueous solution) of an emulsifier wherein the emulsifier comprises

    ▪ saturated stearic and palmitic fatty acids in a w/w ratio of from 1:1 to 5:1;
    ▪ at most 55 wt % (by weight of the emulsifier) of mono-esters;
    ▪ from 30 to 35 wt% (by weight of the emulsifier) of di-esters;
    ▪ from 10 to 25 wt% (by weight of the emulsifier) tri-esters; and ▪ from 4 to 16 wt% (by weight of the emulsifier) poly-esters

- then aerating the aqueous solution

  ○ at a temperature of from 40 to 47°C
  ○ for a time of from 30 to 120 minutes
  ○ to an overrun of from 200 to 800%
  ○ with a bubble size $D_{3,2}$ of from 5 to 25$\mu$m

- and then combining the resulting aerated aqueous solution with the remaining ingredients of the frozen confection in a w/w ratio of aerated aqueous solution to remaining ingredients of from 20:80 to 35:65 to create the edible aerated composition, the remaining ingredients comprising:

  ○ from 0.1 to 5 wt% (by weight of the remaining ingredients) of stabilisers;
  ○ from 0.1 to 20 wt% (by weight of the remaining ingredients) of sugars;
  ○ from 1 to 10 wt% (by weight of the remaining ingredients) of proteins; and
  ○ from 2 to 10 wt% (by weight of the remaining ingredients) of fats.

Preferably the aqueous solution comprises at least 52.5wt% (by weight of the aqueous solution) of the soluble sugar, more preferably at least 55 wt%, more preferably still at least 57.5 wt%, yet more preferably at least 60 wt%, most preferably at least 61 wt%.

Preferably the aqueous solution comprises at most 72.5 wt% (by weight of the aqueous solution) of the soluble sugar, more preferably at most 70 wt%, more preferably still at most 67.5 wt%, yet preferably still at most 65 wt%, most preferably at most 63 wt%.

Preferably the soluble sugar comprises a sugar selected from the list comprising sucrose, fructose, lactose maltodextrins, corn syrups such as DE28 and DE40, or a combination thereof. More preferably the soluble sugar is a monosaccharide or disaccharide. Most preferably the soluble sugar is sucrose.

Preferably the aqueous solution comprises at least 1.3 wt% (by weight of the aqueous solution) of the emulsifier, more preferably at least 1.4 wt%, more preferably still at least 1.6 wt%, yet preferably still at least 1.7 wt%, most preferably at least 1.8 wt%.

Preferably the aqueous solution comprises at most 4 wt% (by weight of the aqueous solution) of the emulsifier, more preferably at most 3.5 wt%, more preferably still at most 3 wt%, yet preferably still at most 2.5 wt%, most preferably at most 2.25 wt%.

Preferably the emulsifier comprises stearic and palmitic fatty acids in a w/w ratio of from 1:1 to 4.5:1, more preferably 1.2:1 to 4.5:1, more preferably still 1.25:1 to 3:1, yet preferably still 1.5:1 to 2.75:1, most preferably 1.75:1 to 2.5:1.

Preferably the emulsifier comprises from 25 to 55 wt% (by weight of the emulsifier) mono-esters, more preferably 25 to 50 wt%, more preferably still 30 to 50 wt%, yet preferably still 35 to 50 wt%, most preferably 35 to 45 wt%.

Preferably the emulsifier comprises from 30 to 34 wt% (by weight of the emulsifier) di-esters, more preferably 31 to 34 wt%.

Preferably the emulsifier comprises from 11 to 24 wt% (by weight of the emulsifier) tri-esters, more preferably 12 to 23 wt%, more preferably still 13 to 22 wt%, yet preferably still 14 to 21 wt%.

The emulsifier comprises from 4 to 16 wt% (by weight of the emulsifier) poly-esters, preferably 5 to 13 wt%, more preferably 6 to 10 wt%.

Preferably the aqueous solution is aerated at a temperature of from 41 to 46°C, more preferably 42 to 45°C, more preferably still 43 to 44°C.

Preferably the aqueous solution is aerated for a time of from 40 to 120 minutes, more preferably 50 to 110min, most preferably 70 to 90min.

Preferably the aqueous solution is aerated to an overrun of from 250 to 600%, more preferably 300 to 500%.

Preferably the aerated aqueous solution has a bubble size $D_{3,2}$ of from 5 to 25$\mu$m, more preferably 6 to 20um, more preferably still 7 to 16$\mu$m, yet more preferably 8 to 14$\mu$m, even more preferably 9 to 13$\mu$m, most preferably 10 to 12$\mu$m.

Preferably the remaining ingredients comprise from 0.1 to 5 wt% (by weight of the remaining ingredients) stabilisers, more preferably from 0.2 to 4.75 wt%, yet more preferably from 0.3 to 4.5 wt%, even more preferably from 0.4 to 4 wt%, more preferably still from 0.5 to 3 wt%, even more preferably still from 0.6 to 2 wt%, most preferably from 0.7 to 1 wt%.

The remaining ingredients may also comprise from additional ingredients suitable for frozen confections such as protein, fat, flavouring, colours, inclusions, and the like.

The balance (to 100 wt%) of the remaining ingredients may be water.

The remaining ingredients are preferably added as a liquid, preferably non-aerated, solution after separate preparation in water.

Preferably the w/w proportion of aerated aqueous solution to remaining ingredients is at least 20:80, more preferably at least 22.5:77.5, yet more preferably at least 25:75, most preferably at least 30:70.

Preferably the w/w proportion of aerated aqueous solution to remaining ingredients is at most 50:50, more preferably at most 45:55, more preferably still at most 40:60, most preferably at most 35:65.

The process of the invention provides an ambient stable edible aerated composition. This composition has the overrun and microstructure required to form an edible aerated frozen confection. The edible aerated composition is ambient stable.

In a second aspect, the present invention provides a process for the production of a frozen confection in which the edible aerated composition produced by the process of the first aspect is frozen. Preferably the freezing is quiescent.

DETAILED DESCRIPTION:

Process for preparation of ambient stable edible aerated composition

The present invention has surprisingly employed a specific process and formulation for the production of an ambient stable edible aerated composition that is required for the production of an aerated frozen confection.

By "edible composition" is meant a composition suitable for consumption by humans as part of a normal diet. By "aerated" edible composition is meant an edible composition that has deliberately had gas incorporated into it. By "ambient stable" aerated edible composition it is meant that the aerated edible composition is capable of retaining the gas that has deliberately been incorporated into it, more specifically it is capable of retaining the gas for a period of at least 28 days at elevated temperatures, specifically temperatures in excess of ambient temperatures, more specifically temperatures of at least 35°C. By "frozen confection" is meant an edible confection made by freezing a mix of ingredients which includes water. Frozen confections typically contain fat, non-fat milk solids and sugars, together with other minor ingredients such as stabilisers, emulsifiers, colours and flavourings. Preferred frozen confections include ice cream, water ice, frozen yoghurt, sorbet and the like. By "aerated" frozen confection is meant a frozen confection that has deliberately had gas incorporated into it.

The process of the invention utilises a split stream approach in which a specific formulation is used to create an aerated precursor which is then combined with the remaining ingredients of the frozen confection to provide an aerated composition that is stable at high ambient temperatures and that then provides a high quality frozen confection when frozen.

The first stage of the process involves the preparation of an aqueous solution. By "aqueous solution" is meant a combination of the non-water ingredients of the aqueous solution dispersed or dissolved in water. The aqueous solution comprises from 50 to 75 wt% (by weight of the aqueous solution) of a soluble sugar and from 1.25 to 5 wt% (by weight of the aqueous solution) of an emulsifier.

## Soluble Sugar

Preferably the aqueous solution comprises at least 52.5wt% (by weight of the aqueous solution) of the soluble sugar, more preferably at least 55 wt%, more preferably still at least 57.5 wt%, yet more preferably at least 60 wt%, most preferably at least 61 wt%.

The upper level of the soluble sugar may a function of the solubility of that sugar at the lowest temperature of the process of the invention. For example, if the concentration of the soluble sugar is above the solubility limit at the temperature of aeration, sugar crystals may form which destabilise the air structure aeration. Therefore, preferably the aqueous solution comprises at most 72.5 wt% (by weight of the aqueous solution) of the soluble sugar, more preferably at most 70 wt%, more preferably still at most 67.5 wt%, yet preferably still at most 65 wt%, most preferably at most 63 wt%.

The soluble sugar may comprise a sugar selected from the list comprising sucrose, fructose, lactose maltodextrins, corn syrups such as DE28 and DE40, or a combination thereof. More preferably the soluble sugar is a monosaccharide or disaccharide. Most preferably the soluble sugar is sucrose.

## Emulsifier

It has been found that a specific type of emulsifier is required for the present invention. The emulsifier may be a sucrose ester, polyglycerol ester, sorbitan ester, polysorbate ester, organic acid ester, mono-, and di-glyceride or a combination thereof having the abovementioned compositional properties of stearic:palmitic ratio and proportions of mono-, di, tri-, and poly-esters

Preferably the emulsifier is a sucrose ester, more preferably S-570, S-770, S-970, or a mixture thereof

Without wishing to be bound by theory, the inventors believe that the benefits of the high levels of soluble sugar in the aqueous phase is that the solubility of the emulsifier is reduced due to the presence of the already dissolved soluble sugar. The emulsifier is therefore driven into a lamellar structure which then acts to stabilise the air phase by effectively creating a cage around the air cells because the soluble sugar and emulsifier are in the same solution prior to aeration.

In addition, after aeration, the air/water interfacial tension is very low at approx. $\leq 10$ mN/m which delivers very low disproportionation, the tendency of small air cells to grow bigger is greatly reduced, and the formulation retains its fine air microstructure when aerated. As used herein "interfacial tension" means the free energy required to increase the contact area between two largely immiscible phases. Interfacial tension can be measured by several techniques such as drop shape or force plate tensiometry and it is usually reported with units of force per length (equivalent to energy per surface area).

Emulsifiers are made up of hydrophilic heads and hydrophobic tails. As set out above, in the present invention the tails have particular properties, i.e. they are fatty acid chains that are esterified to the headgroup of the emulsifier and are of different lengths (Palmitic = C16:0, Stearic = C18:0). In the present invention, the fatty acid chains of the emulsifier are saturated. That is to say, they contain no double bonds.

The present invention has found that in order to provide a stable aerated ambient composition, more esterified stearic fatty acid is required and therefore the w/w ratio of stearic:palmitic fatty acids in the emulsifier is from 1:1 to 5:1.

Preferably the emulsifier comprises stearic and palmitic fatty acids in a w/w ratio of from 1:1 to 4.5:1, more preferably 1.2:1 to 4.5:1, more preferably still 1.25:1 to 3:1, yet preferably still 1.5:1 to 2.75:1, most preferably 1.75:1 to 2.5:1.

In addition, the number of tails attached to the head has been found to be important. Emulsifiers have a head group and typically 1/2/3 or more tails attached by esterification. The maximum number of tails depends on the headgroup number of -OH groups available for esterification; sucrose can have maximum of 8; glycerol a maximum of 3 (but at n=3 it becomes a tri-glyceride i.e. fat), polyglycerol esters can have more than 3 depending on the degree of crosslinking of the glycerol headgroups. Consequently, emulsifiers are a blend of mono-, di-, tri-, and poly-esters and the inventors have found that this is essential to achieve a stable aerated ambient composition. Therefore, emulsifiers that have head-groups that allow esterification of 2 tails or more are utilised. Sucrose esters are one such emulsifier. The emulsifier of the present invention comprises:

- at most 55 wt% (by weight of the emulsifier) of mono-esters;
- from 30 to 35 wt% (by weight of the emulsifier) of di-esters;
- from 10 to 25 wt% (by weight of the emulsifier) tri-esters; and
- from 4 to 16 wt% (by weight of the emulsifier) poly-esters

Preferably the emulsifier comprises from 25 to 55 wt% (by weight of the emulsifier) mono-esters, more preferably 25 to 50 wt%, more preferably still 30 to 50 wt%, yet preferably still 35 to 50 wt%, most preferably 35 to 45 wt%.

Preferably the emulsifier comprises from 30 to 34 wt% (by weight of the emulsifier) di-esters, more preferably 31 to 34 wt%.

Preferably the emulsifier comprises from 11 to 24 wt% (by weight of the emulsifier) tri-esters, more preferably 12 to 23 wt%, more preferably still 13 to 22 wt%, yet preferably still 14 to 21 wt%.

The emulsifier comprises from 4 to 16 wt% (by weight of the emulsifier) poly-esters, preferably 5 to 13 wt%, more preferably 6 to 10 wt%.

The amount of emulsifier required in the aqueous solution is dependent on the viscosity of the mix and on sugar level. The aqueous solution therefore comprises from 1.25 to 5 wt% (by weight of the aqueous solution) of an emulsifier.

Preferably the aqueous solution comprises at least 1.3 wt% (by weight of the aqueous solution) of the emulsifier, more preferably at least 1.4 wt%, more preferably still at least 1.6 wt%, yet preferably still at least 1.7 wt%, most preferably at least 1.8 wt%.

Preferably the aqueous solution comprises at most 4 wt% (by weight of the aqueous solution) of the emulsifier, more preferably at most 3.5 wt%, more preferably still at most 3 wt%, yet preferably still at most 2.5 wt%, most preferably at most 2.25 wt%.

The emulsifier may be added together or after the soluble sugar is added to the water. For example, the soluble sugar may be added to water at room temperature and mixed using a Silverson high shear mixer. The emulsifier may then be added and the temperature increased to 80°C and kept at this temperature for approx. 5 minutes under high shear mixing. The aqueous solution may then be cooled to the selected temperature for aeration.

Following this preparation, the viscosity of the mix may be between 0.2 and 0.5 Pa s at a shear rate of 100 $S^{-1}$ when measured at 20°C. The aqueous solution is then ready for aeration which can be achieved for example by pouring into the bowl of an aeration device such as a food processor Kenwood KMix with planetary motion as described below.

**Salt**

The aqueous solution may optionally comprise salt in order to provide improved overrun and microstructure. The aqueous solution therefore preferably comprises salt, more preferably at least 0.01wt% (by weight of the aqueous solution) salt, more preferably still at least 0.025 wt%, yet more preferably at least 0.05 wt%, even more preferably still at least 0.1 wt%, most preferably still at least 0.15 wt%, and preferably at most 0.5wt% (by weight of the AS) salt, more preferably at most 0.4 wt%, more preferably still at most 0.3 wt%, even more preferably at most 0.2 wt%.

Where used, the salt may be selected from the list comprising sodium chloride, calcium chloride, aluminium chloride, sodium carbonate and sodium phosphate. Preferably the salt is calcium chloride dihydrate.

pH

pH may be important to control microbiological stability as in the lower pH ranges of about 3 to about 7 several preservatives can be used together with the appropriate pasteurisation regime such as pasteurisation or UHT. Preferably the pH range is from 3.2 to 6.5.

Processing conditions to create aerated aqueous solution

The aqueous solution thus prepared is then ready for aeration which can be achieved for example by pouring into the bowl of an aeration device such as a food processor Kenwood KMix with planetary motion, which may be operated at full speed for a particular time using a metal balloon-type whisker attachment.

The inventors have found that in order to provide the required ambient stable edible aerated ambient composition, the conditions under which the aqueous solution is aerated is important. In contrast to what would normally be done in order to aerate, in the present invention, aeration is done at a high temperature but for a longer time to a lower overrun than that which could be maximally achieved for example at a lower temperature or for a shorter time. Therefore, the aqueous solution is aerated at a temperature of from 40 to 47°C for a time of from 30 to 120 minutes to an overrun of from 200 to 800%

Without wishing to be bound by theory, the inventors believe that by aerating the aqueous solution at an elevated temperature for an increased period of time foam that would normally be stabilised by the fraction of the emulsifier that would be unstable at the elevated temperatures that will be experienced by the product in an ambient supply chain either does not form or is destroyed. As a consequence, the aerated aqueous solution that remains is stabilised by the more effective fractions of the emulsifiers and therefore delivers ambient stability to the resulting edible ambient stable aerated composition which is formed when the remaining ingredients of the frozen confection are combined with the aerated aqueous solution.

**Processing temperature**

Preferably the aqueous solution is aerated at a temperature of from 41 to 46°C, more preferably 42 to 45°C, more preferably still 43 to 44°C.

In order to achieve the desired temperature of aeration, the bowl may be modified with a jacketed outer which is connected to a thermostated bath to provide control of temperature inside the wall cavity through a circulating fluid.

**Processing time**

Preferably the aqueous solution is aerated for a time of from 40 to 120 minutes, more preferably 50 to 110min, most preferably 70 to 90min,

**Overrun**

Overrun is defined by the formula:

$$\textbf{overrun (\%) = (weight of mix - weight of aerated product) / (weight of aerated product)}$$
$$\textbf{x 100}_,$$

where the weights refer to a fixed volume of mix or product. Overrun is measured at atmospheric pressure.

Preferably the aqueous solution is aerated to an overrun of from 250 to 600%, more preferably 300 to 500%.

$D_{3,2}$

$D_{3,2}$ (Sauter mean diameter) is an average diameter with the same ratio of volume to surface area as the entire particle (bubble) size distribution. The bubble size distribution can be measured using the Malvern Mastersizer 2000, with the rotor speed set at 1500 rpm by adding an aliquot of the aerated sample until the obscuration in the measuring cell reaches a value of 12.5%. The $D_{3.2}$. is calculated by the instrument software using a general purpose spherical model for the bubble size distribution by averaging 3 measurements per samples (each consisting of 10000 measuring snaps over 10 s).

Preferably the aerated aqueous solution has a bubble size $D_{3,2}$ of from 5 to 25$\mu$m, more preferably 6 to 20$\mu$m, more preferably still 7 to 16$\mu$m, yet more preferably 8 to 14$\mu$m, even more preferably 9 to 13$\mu$m, most preferably 10 to 12$\mu$m.

**Remaining ingredients**

As stated above, the aerated aqueous solution is combined with the remaining ingredients of the frozen confection to create the ambient stable edible aerated composition.

In the present invention the remaining ingredients comprise:

- from 0.1 to 5 wt% by weight of the remaining ingredients of stabilisers;
- from 0.1 to 20 wt% by weight of the remaining ingredients of sugars;
- from 1 to 10 wt% by weight of the remaining ingredients of proteins; and
- from 2 to 10 wt% by weight of the remaining ingredients of fats.

The remaining ingredients optionally comprise from 0.01 to 0.2 wt% by weight of the remaining ingredients of salts.

Stabilisers may include guar gum LBG, tara gum, xanthan gum, citrus fibres or a combination thereof;
Sugars may include sucrose, fructose, lactose, glucose or maltodextrins such as the DE28 and DE40 grades, or a combination thereof;
Proteins may be dairy or vegetable proteins and may include milk proteins, soya protein, pea protein, or a combination thereof; and
Fats may be dairy or vegetable fats and may include milk cream, butter fat, coconut oil or a combination thereof.

The remaining ingredients of the frozen confection may be suitable for the preparation of any unfrozen confection including: Ice Cream; Sorbet; Water ice; Milk ice.

The remaining ingredients may also comprise flavourings, colours, and/or inclusions.

Preferably the remaining ingredients comprise from 0.2 to 4.75 wt% by weight of the remaining ingredients stabilisers, yet more preferably from 0.3 to 4.5 wt%, even more preferably from 0.4 to 4 wt%, more preferably still from 0.5 to 3 wt%, even more preferably still from 0.6 to 2 wt%, most preferably from 0.7 to 1 wt%.

Preferably the remaining ingredients comprise from 0.2 to 17.5 wt% by weight of the remaining ingredients of sugars, more preferably from 0.5 to 15 wt%, more preferably still from 1 to 10 wt%, most preferably from 2 to 5 wt%.

Preferably the remaining ingredients comprise from 2 to 9 wt% by weight of the remaining ingredients of proteins, more preferably from 3 to 8 wt%, more preferably still from 4 to 7 wt%, most preferably from 5 to 6 wt%.

Preferably the remaining ingredients comprise from 3 to 10 wt% by weight of the remaining ingredients of fats, more preferably from 4 to 10 wt%, more preferably still from 5 to 9 wt%, most preferably from 6 to 8 wt%.

The balance (to 100 wt%) of the remaining ingredients may be water.

The remaining ingredients are preferably added as a liquid, preferably non-aerated, solution after separate preparation in water.

The w/w ratio of aerated aqueous solution to remaining ingredients is at least 20:80, preferably at least 22.5:77.5, more preferably at least 25:75, most preferably at least 30:70.

The w/w ratio of aerated aqueous solution to remaining ingredients is at most 50:50, preferably at most 45:55, more preferably at most 40:60, most preferably at most 35:65.

Edible Aerated Composition

The process of the invention provides an ambient stable edible aerated composition. This composition has the overrun and microstructure required to form an edible aerated frozen confection.

The edible aerated composition may comprise

- from 15 to 40 wt% of a soluble sugar,
- from 0.1 to 2 wt% of an emulsifier,
- from 0.1 to 5wt% of a stabiliser,
- water

and may have an overrun of from 50 to 200%.

The edible aerated composition has the overrun and microstructure required to form an edible aerated frozen confection. The edible aerated composition is ambient stable.

**Sugar**

Preferably the edible aerated composition comprises at least 17.5 wt of the soluble sugar, more preferably at least 20 wt%, more preferably still at least 22.5 wt%.

Preferably the edible aerated composition comprises at most 37.5 wt% of the soluble sugar, more preferably at most 35 wt%, more preferably still at most 32.5 wt%, yet more preferably at most 30 wt%, even more preferably at most 27.5 wt%.

**Emulsifier**

Preferably the edible aerated composition comprises at least 0.15 wt% of the emulsifier, more preferably at least 0.25 wt%, more preferably still at least 0.4 wt%, yet preferably still at least 0.5 wt%, most preferably at least 0.7 wt%.
Preferably the edible aerated composition comprises at most 1.9 wt% of the emulsifier, more preferably at most 1.8 wt%, more preferably still at most 1.7 wt%, yet preferably still at most 1.6 wt%, most preferably at most 1.5 wt%.

**Stabiliser**

The stabiliser may be selected from the group comprising locust bean gum, guar gum, xanthan gum, k-carrageenan, edible fibres, or combination thereof. Preferably the stabiliser is xanthan gum.
Preferably the edible aerated composition comprises from 0.1 to 5 wt% stabiliser or stabilisers, more preferably from 0.15 to 4.75 wt%, yet more preferably from 0.2 to 4.5 wt%, even more preferably from 0.25 to 4 wt%, more preferably still from 0.3 to 3 wt%, even more preferably still from 0.35 to 2 wt%, most preferably from 0.4 to 1 wt%.

**Overrun**

Preferably the edible aerated composition has an overrun of from 75 to 175%, more preferably 100 to 150%.

**Salt**

The edible aerated composition may comprise salt at a concentration of between 1 and 30 mM, preferably at most 12mM, most preferably at most 6 mM. The salt may be any of the types provided above in respect of the first aspect, it is preferably calcium chloride dihydrate.

$D_{3,2}$

The edible aerated composition is capable of maintaining air cell size and microstructure over time, resisting disproportionation, Oswald ripening, and/or coarsening over time. Preferably the D3,2 air cell size distribution of the edible aerated composition after 28-days storage at 35°C is from 6 to 30$\mu$m preferably from 7 to 15$\mu$m

Process for production of frozen confection

As will be appreciated, a frozen aerated confection may be obtained by freezing the edible aerated composition produced by the process of the first aspect. Preferably the freezing is quiescent.

**EXAMPLES**

As set out above, the present invention utilises a split stream process in which an Aqueous Solution (AS) is aerated to create an Aerated Aqueous Solution (AAS) which is combined with Remaining Ingredients (RI) to produce an Edible Aerated Composition (EAC) that is stable even at elevated temperatures that can be used to produce high quality aerated frozen confections.
In the tables that follow, the following information is provided:

- The formulation of the AS
- The temperature at which, and time for which the AS is aerated to create the AAS
- The overrun and D3,2 of the resulting AAS
- The formulation of the RI
- The proportions of the AAS and RI that are combined to create the EAC
- The formulation of the EAC
- The overrun and D3,2 of the EAC

Process for creation of AS

Dry ingredients were combined and added to de-ionised water at room temperature and mixed using a Silverson high shear mixer as the temperature was increased to 80°C and held at this temperature for approx. 5min while still mixing at high shear. The mix was then cooled to the relevant temperature for aeration as shown in the tables below.

Process for aeration of AS to form AAS

Unless otherwise stated aeration of the Aqueous Solution to create the Aerated Aqueous Solution was carried out by placing the AS into the bowl of a Kenwood KMix food processor with planetary motion, which was operated at full speed for the specified amount of time using a metal balloon-type whisker attachment. The bowl was jacketed and connected to a thermostated bath to provide control of temperature inside the wall cavity through a circulating fluid at the temperature shown in the tables below. The time of aeration is also shown in the tables.

Process for addition of RI to AAS to form EAC

Unless otherwise stated, the remaining ingredients were added to the AAS at ambient laboratory temperature (22°C (+/- 1°C)) with gentle stirring using a Kenwood food mixer with "K-beater" attachment at the lowest speed for sufficient time (about 10 minutes) to create a smooth mixture. The amounts of salt in the RI are provided as both wt% and mM.

Stability testing of EAC

Stability of the EACs made in the experiments that follow were tested by filling silanized glass vials with approx. 28ml of the relevant EAC and marking the fill level on the vial. Vials were either left in ambient conditions (at lab temperature of 22°C (+/-1°C)) or placed in a temperature controlled chamber (Binder BD 240) at 35°C (+/-0.9°C) to represent the elevated temperatures that would be experienced in very much hotter climates. The vials were assessed weekly to determine the stability of the EAC. Results of the stability assessments are provided below.

## EXAMPLE 1.1 - EFFECT OF AERATION TEMPERATURE

This Example demonstrates that if the aeration temperature of the aqueous solution is too low, then a stable end product is not achieved. Samples 1.1A, 1.1B and WorkingExample were made as shown in Table 1.1.

Formulation and processing

**Table 1.1 - Formulation and processing of samples 1.1A, 1.1B, and WorkingExample**

| | | Sample | | |
|---|---|---|---|---|
| | | **1.1A** | **1.1B** | **WorkingExample** |
| | | **Ingredient (wt%)** | | |
| **Aqueous Solution (AS)** | Sucrose | 62 | 62 | 62 |
| | S-970 | 2 | 2 | 2 |
| | $CaCl_2$ (dihydrate) | 0.049 (4.3 mM) | 0.049 (4.3 mM) | 0.049 (4.3 mM) |
| | Water | to 100 | to 100 | to 100 |
| | | | | |
| **Process for aerating AS** | Time (min) | 120 | 120 | 85 |
| | Temperature of circulating fluid (°C) | 25 | 35 | 40 |
| | | | | |
| **Aerated Aqueous Solution (AAS)** | Overrun of AAS (%) | 546 | 466 | 375 |
| | D3,2 droplet size (um) | 6.2 | 4.3 | 11.2 |
| | | | | |

(continued)

|  |  | Sample | | |
|---|---|---|---|---|
|  |  | 1.1A | 1.1B | WorkingExample |
|  |  | Ingredient (wt%) | | |
| Remaining Ingredients (RI) | Sucrose | 12.1 | 8.9 | 2.7 |
|  | CaCl$_2$ (dihydrate) | 0.049 (3.3 mM) | 0.049 (3.3 mM) | 0.049 (3.3 mM) |
|  | Xanthan gum | 0.67 | 0.72 | 0.8 |
|  | Water | to 100 | to 100 | to 100 |
| Edible Aerated Composition (EAC) | Proportion AAS (wt%) | 25.9 | 30.3 | 37.6 |
|  | Proportion RI (wt%) | 74.1 | 69.7 | 62.4 |
|  |  | Ingredient (wt%) | | |
|  | Sucrose | 25 | 25 | 25 |
|  | S-970 | 0.52 | 0.61 | 0.75 |
|  | CaCl$_2$ (dihydrate) | 0.049 (3.7 mM) | 0.049 (3.7 mM) | 0.049 (3.7 mM) |
|  | Xanthan gum | 0.5 | 0.5 | 0.5 |
|  | Water | to 100 | to 100 | to 100 |
|  |  |  |  |  |
|  | Overrun | 131 | 140 | 143 |
|  | D3,2 (um) after 28-days storage at 35°C | 6.2 | 4.2 | 10.6 |

Stability test

Figure 1a shows the stability of the EACs made according to 1.1A, 1.1B, and WorkingExample. It can be seen that the EAC's prepared from the aqueous solution aerated at 25°C and 35°C were unstable, loosing volume after 28 days at both 22°C and 35°C storage.

In contrast, the EAC prepared from the aqueous solution aerated at 40°C was stable not just at 22°C but also at the higher storage test temperature of 35°C. Table 1.1. also shows that WorkingExample had a D3,2 of 10.6 um after 28-days storage at 35°C. This smaller bubble size is associated with smoothness of the product and is also less prone to density driven phase separation.

## EXAMPLE 1.2 - EFFECT OF AERATION TEMPERATURE, CONTROLLING FOR CONCENTRATION OF EMULSIFIER

It will be noted that Example 1.1 attempted to have the same overrun of approx. 140% in the final EAC's for samples 1.1A, 1.1B, and WorkingExample. However, because the AASs of these samples had overruns of 546%, 466%, and 375% respectively different absolute amounts of AAS had to be used in order to provide the approximately same overrun of 140%. The amounts of sucrose and xanthan gum in the Remaining Ingredients were calculated such that they were equal in the final Edible Aerated Compositions of samples 1.1A, 1,1B, and WorkingExample. However, the consequence of controlling the overrun in the Edible Aerated Compositions of samples 1.1A, 1,1B, and was that WorkingExample had the highest level of emulsifier (0.75wt% of S-970).

Therefore, this example 1.2 was carried out to demonstrate that the enhanced stability of WorkingExample vs. 1.1A and 1.1B in the previous example was not simply due to a higher level of emulsifier. Samples 1.2 and WorkingExample had different overruns but the same amount of emulsifier as shown in Table 1.2.

**Table 1.2 - Formulation and processing of samples** 1.2A and WorkingExample

|  |  | Samples | |
|---|---|---|---|
|  |  | **1.2A** | **WorkingExample** |
|  |  | **Ingredient (wt%)** | |
| **Aqueous Solution (AS)** | Sucrose | 62 | 62 |
|  | S-970 | 2 | 2 |
|  | $CaCl_2$ (dihydrate) | 0.049 (4.3 mM) | 0.049 (4.3 mM) |
|  | Water | to 100 | to 100 |
|  |  |  |  |
| **Process for aerating AS** | Time (min) | 60 | 85 |
|  | Temperature of circulating fluid (°C) | 20 | 40 |
| **Aerated Aqueous Solution (AAS)** | Overrun of AAS (%) | 553 | 375 |
|  | D3,2 droplet size (um) | 6.4 | 11.2 |
|  |  |  |  |
| **Remaining Ingredients (RI)** | Sucrose | 8.3 | 2.7 |
|  | $CaCl_2$ (dihydrate) | 0.049 (3.3 mM) | 0.049 (4.3 mM) |
|  | Xanthan gum | 0.72 | 0.8 |
|  | Water | to 100 | to 100 |
|  |  |  |  |
| **Edible Aerated Composition (EAC)** | Proportion AAS (wt%) | 37.6 | 37.6 |
|  | Proportion RI (wt%) | 62.4 | 62.4 |
|  | **Ingredient (wt%)** | | |
|  | Sucrose | 25 | 25 |
|  | S-970 | 0.75 | 0.75 |
|  | $CaCl_2$ (dihydrate) | 0.049 (3.7 mM) | 0.049 (3.7 mM) |
|  | Xanthan gum | 0.5 | 0.5 |
|  | Water | to 100 | to 100 |
|  |  |  |  |
|  | Overrun | 200 | 143 |
|  | D3,2 (um) after 28-days storage at 35°C | 7.3 | 10.6 |

Stability test

Figure 1b shows the stability of the EACs made according to 1.2A and WorkingExample. Although the D3,2 of 1.2A shows small air cells size both before and after storage for 28-days at 35°C it can be seen that sample 1.2A prepared from the aqueous solution aerated at a lower temperature was unstable, loosing volume after 28 days at both 22°C and 35°C.

In contrast, even though the amount of emulsifier in the EACs was the same, WorkingExample prepared from the aqueous solution aerated at 40°C was stable not just at 22°C but also at the higher storage test temperature of 35°C and again had a small D3,2 size of 10.6um after 28-days storage at 35°C.

## EXAMPLE 2 - EFFECT OF SPLIT STREAM PROCESSING

In this experiment, the formulations of the final Edible Aerated Compositions were the same, having the same ingredients in the same amounts. However, the experiment assessed the importance of creating the Aerated Aqueous Solution separately from the Remaining Ingredients before combining to make an Edible Aerated Composition.

Samples WorkingExample and 2A and were made as shown in Table 2.1 & 2.2 respectively. WorkingExample was prepared as before. Sample 2A was prepared by combining all ingredients together before aerating at 20°C for 60min to an overrun of 546%. 20°C was chosen because it was found that Sample 2A would not aerate at all at the higher temperature of 40°C. An alternative approach in which sample 2A was aerated at 25°C then gently stirred at 45°C also did not deliver a stable foam.

**Table 2.1 - Formulation and processing of WorkingExample**

|  |  | WorkingExample |
|---|---|---|
|  |  | Ingredient (wt%) |
| **Aqueous Solution (AS)** | Sucrose | 62 |
|  | S-970 | 2 |
|  | $CaCl_2$ (di-hydrate) | 0.049 (4.3 mM) |
|  | Water | to 100 |
|  |  |  |
| **Process for aerating AS** | Time (min) | 85 |
|  | Temperature of circulating fluid (°C) | 40 |
| **Aerated Aqueous Solution (AAS)** | Overrun of AS (%) | 375 |
|  | D3,2 droplet size | 11.2 |
|  | (um) |  |
|  |  |  |
| **Remaining Ingredients (RI)** | Sucrose | 2.7 |
|  | $CaCl_2$ (di-hydrate) | 0.049 (3.3 mM) |
|  | Xanthan gum | 0.8 |
|  | Water | to 100 |
|  |  |  |

(continued)

|  | | WorkingExample |
| --- | --- | --- |
|  | | Ingredient (wt%) |
| **Edible Aerated Composition (EAC)** | Proportion AAS | 37.6 |
| | (wt%) | |
| | Proportion RI (wt%) | 62.4 |
| | | Ingredient (wt%) |
| | Sucrose | 25 |
| | S-970 | 0.75 |
| | $CaCl_2$ (di-hydrate) | 0.049 (3.7 mM) |
| | Xanthan gum | 0.5 |
| | Water | to 100 |
| | | |
| | Overrun | 143 |
| | D3,2 droplet size | 10.6 |
| | 6um after 28-days | |
| | storage at 35°C (um) | |

**Table 2.2 - Formulation and processing of Sample 2A**

|  | | Sample 2A |
| --- | --- | --- |
|  | | Ingredient (wt%) |
| **Edible Aerated Composition of Sample 2A (EAC)** | Sucrose | 25 |
| | S-970 | 0.75 |
| | $CaCl_2$ (di-hydrate) | 0.049 (3.7 mM) |
| | Xanthan gum | 0.5 |
| | Water | to 100 |
| **Preparation of Edible Aerated Composition of Sample 2A (EAC)** | Time (min) | 60 |
| | Temperature of circulating fluid (°C) | 20 |
| | | |
| | Overrun | 546 |
| | D3,2 droplet size 6um after 28-days storage at 35°C (um) | 19.9 |

Stability test

Figure 2 shows the stability of the EACs of samples 2A and WorkingExample. The results show that the single stream approach (Sample 2A) did not result in a stable composition with loss of volume observed after 28 days at both 22°C and 35°C. Also, Sample 2A when freshly prepared had a very large D3,2 of 21.6um, and after 28-days storage at 35°C the D3,2 was 19.9um.

In contrast, WorkingExample prepared from the split stream approach was stable not just at 22°C but also at the higher storage test temperature of 35°C and had a D3,2 of 10.6um after 28-days storage at 35°C.

**EXAMPLE 3 - EFFECT OF EMULSIFIER TYPE**

In this experiment, various emulsifiers were assessed for their ability to provide a stable composition.

The emulsifiers tested fell both inside and outside the claimed parameters of: stearic to palmitic ratio; proportion of mono-esters; proportion of di-esters; proportion of tri-esters; and proportion of poly-esters (see below for analytical methods). The emulsifiers tested and their properties are shown in Table 3.1. Those falling within the claimed invention (S570, S770, S970) are shown in bold.

**Table 3.1 - Properties of emulsifiers**

|  | Emulsifiers | | | | | | | |
|---|---|---|---|---|---|---|---|---|
|  | S370 | **S57 0** | **S770** | **S970** | S1170 | S1670 | CITRE M | PGE 55 |
| **Stearic:Palmitic fatty acid ratio (w/w)** | 2.3:1 | **2.1: 1** | **2:1** | **2.2:1** | 1.9:1 | 1.8:1 | 1:1 | 1:1 |
| **Mono-esters (wt%)** | 20 | **31** | **41** | **46** | 59 | 77 | 47 | n/a |
| **Di-esters (wt%)** | 31 | **34** | **32** | **31** | 28 | 19 | 41 | n/a |
| **Tri-esters (wt%)** | 27 | **21** | **16** | **14** | 8 | 3 | 7 | n/a |
| **Poly-esters (wt%)** | 21 | **10** | **7** | **6** | 2 | 1 | 0 | n/a |

Analytical methods:

Chromatography analysis: SEC and GC

Size Exclusion Chromatography (SEC) was used in to determine sucrose ester composition (Mono-, Di-, Tri-, of the S-x70 emulsifiers, obtained from Mitsubishi);

The S : P ratio was carried out by GC after hydrolysis (see analysis (2) below) resulting in the values shown in Table 3.1. Hydrolysis was not performed for S-370, however, supplier specification states stearic acid is approx. 70% (the rest is palmitic acid) so S:P is 2.3 : 1

Description of SEC

Sucrose Esters samples were analysed using Size Exclusion Chromatography (SEC) using ISO method ISO 18395 ('Animal and vegetable fats and oils - Determination of monoacylglycerols, diacylglycerols, triacylglycerols and glycerol by high performance size exclusion chromatography'). The method was slightly modified to make it suitable for the analysis of sucrose esters samples and to meet the specifications of the specific liquid chromatography instrument used. Four factors were altered: the operating temperature was 33 °C instead of 35 °C, four separation columns were used instead of only three columns as described in the ISO method, the injection volume as 10 $\mu$L instead of 20 $\mu$L, and the sample concentration was increased to 40 mg/mL to improve the detection limits.

For the analysis, approximately 100 mg sample was dissolved in 2.5 mL tetrahydrofuran (THF). The sample was filtered to remove traces of dust and particulates. 10 $\mu$L of the sample was injected into a column system consisting of four identical, serially connected SEC columns (Polymer Laboratories, PL Gel polystyrene/divinylbenze, Length 300 mm, Diameter 7.5 mm, Particle size 5 $\mu$m, Pore size 500 Å). Elution was performed using THF as the eluent at a temperature of 33°C and a flow rate of 0.8 mL/min. Detection was by means of a refractive index detector. The SPE isomers were separated according to molecular weight with the heavier isomers eluting earlier. Elution windows of the different SPE isomers were established using pure standards.

Gas Chromatography (GC) was used for the for full characterization (composition and fatty acid profile) of Cltrem and PGE55 (composition not possible). I was also used for the chemicals in Example 11. The S:P ratios for Citrem and PGE55 are shown in Table 3.1.

Description of GC

To determine the chemical profile of the surfactant esters, two analyses are performed: (1) direct analysis of the surfactant, in order to determine the relative fractions of mono- di-, triand polyesters and (2) alkaline hydrolysis of surfactant and subsequent analysis, in order to determine the exact fatty acid profile.

Direct analysis (1) was performed by preparation of 5% surfactant solutions in chloroform, which were derivatized and injected into the GC. To obtain the fatty acid profile (2), each surfactant was hydrolysed by following a standard saponification procedure adapted from IUPAC. Briefly, the sample was placed in 3.33 M alcoholic KOH solution (80 vol. % EtOH) and kept for 4 h at T = 50 °C, with intermittent shaking of the sample. Afterwards, the solvent was evaporated and 2 M HCl solution was used to disperse the sample and to protonate the obtained fatty acid soaps. The latter were finally extracted by chloroform, derivatized and analysed by GC.

Before introducing the sample into the GC, each solution was subjected to the following derivatization procedure:

(1) Addition of cetanol (in chloroform) standard to the sample to yield a concentration of 3.86 mg/mL cetanol in the sample. Transfer of 100 $\mu$L sample to a 1 mL glass vial.
(2) Addition of 100 $\mu$L pyridine and 400 $\mu$L BSTFA to each sample.
(3) Mixture heated for 1 hour at 60 °C. Then add 50 $\mu$L acetic acid
(4) After cooling to room temperature, 80 $\mu$L of each sample is diluted with 950 $\mu$L isooctane in GC vials.
(5) The solution prepared in this way is introduced into the GC.

The GC analyses were performed on a TRACE GC apparatus (ThermoQuest, Italy) equipped with autosampler AS 2000. Capillary column was Trace Gold TG -5HT (Thermo, USA), with the following specification: 5% phenyl methylpolysiloxane, 10 m length, I.D. 0.53 mm, 0.15 $\mu$m film thickness. Cold on-column injection was used, at a secondary cooling time of 0.3 min. The injection volume was 1 $\mu$L. The oven was programmed as follows: start at 110 °C, ramp 1 to 120 °C at 5 °C/min, ramp 2 to 400 °C at 40 °C/min, hold 3 min. The flame-ionization detector (FID) temperature was set to 400 °C. The carrier gas was helium, set at a constant pressure flow mode (120 kPa). The detector gases were hydrogen and air, with nitrogen as make-up gas. The secondary cooling gas was nitrogen with a purity of 99.99 %. All other gases were of 99.999 % purity.

The actual formulations of the final Edible Aerated Compositions of Example 3 were created to ensure that the concentration of emulsifier was the same in the final Edible Aerated Compositions. This was achieved by having the same overrun (approx. 380%) in the Aerated Aqueous Solution, which was achieved by aerating the Aqueous Solution for different periods of time.

**Table 3.2 - Formulation and processing of Working and Non-working Examples of Example 3**

| | | Working Examples | | | Non-working Examples | | | | |
|---|---|---|---|---|---|---|---|---|---|
| | Sample ID | WE_570 | WE_770 | WE_970 | 3A | 3B | 3C | 3D | 3E |
| | Emulsifier Used | S570 | S770 | S970 | S370 | S1170 | S1670 | CITREM | PGE 55 |
| | | Ingredients (wt%) | | | | | | | |
| Aqueous Solution (AS) | Sucrose | 62 | 62 | 62 | 62 | 62 | 62 | 62 | 62 |
| | Emulsifier | 2 | 2 | 2 | 2 | 2 | 2 | 2 | 2 |
| | CaCl$_2$ (dihydrate) | 0.049 (4.3 mM) | 0.088 (7.8 mM) | 0.049 (4.3 mM) | 0.088 (7.8 mM) | 0.049 (4.3 mM) | 0.049 (4.3 mM) | - | - |
| | Water | to 100 | | | | | | | |
| Process for aerating AS | Time (min) | 55 | 45 | 85 | | 45 | | 45 | 55 |
| | Temperatur e of circulating fluid (°C) | 40 | 40 | 40 | | 40 | | 40 | 40 |
| | | | | | | | | | |
| Aerated Aqueous Solution (AAS) | Overrun of AS (%) | 386 | 387 | 375 | | 381 | | 387 | 379 |
| | D3,2 droplet size (um) | 13.5 | 10.8 | 11.2 | | 5.2 | | 17.5 | 14.8 |

(continued)

| Remaining Ingredients (RI) | Sample ID | WE_570 | WE_770 | WE_970 | 3A | 3B | 3C | 3D | 3E |
|---|---|---|---|---|---|---|---|---|---|
| | | **WorkingExamples** | | | **Non-working Examples** | | | | |
| | Sucrose | 3.7 | 3.7 | 2.7 | | 3.3 | | 3.0 | 3.8 |
| | CaCl$_2$ (dihydrate) | 0.049 (3.3 mM) | 0.088 (6.0 mM) | 0.049 (3.3 mM) | | 0.049 (3.3 mM) | | - | - |
| | Xanthan gum | 0.8 | 0.8 | 0.8 | | 0.79 | | 0.8 | 0.79 |
| | Water | to 100 | to 100 | to 100 | | to 100 | | to 100 | to 100 |
| **Edible Aerated Composition (EAC)** | Proportion AAS (wt%) | 36.6 | 36.6 | 37.6 | | 37 | | 36.5 | 37.2 |
| | Proportion RI (wt%) | 63.4 | 63.4 | 62.4 | | 63 | | 63.5 | 62.8 |
| | **Ingredient (wt%)** | | | | | | | | |
| | Sucrose | 25 | 25 | 25 | | 25 | | 25 | 25 |
| | Emulsifier | 0.73 | 0.73 | 0.75 | | 0.74 | | 0.73 | 0.74 |
| | CaCl$_2$ (dihydrate) | 0.049 (3.7 mM) | 0.088 (6.6 mM) | 0.049 (3.7 mM) | | 0.049 (3.7 mM) | | - | - |
| | Xanthan gum | 0.5 | 0.5 | 0.5 | | 0.5 | | 0.5 | 0.5 |
| | Water | to 100 | to 100 | to 100 | | to 100 | | to 100 | to 100 |
| | Overrun | 122 | 123 | 143 | | 123 | | 117 | 130 |
| | D3,2 droplet size (um) after 28d storage at 35°C | 13.1 | 10.5 | 10.6 | | 7.3 | | 13.7 | 18.8 |

Stability test

Figure 3 shows the stability of the Edible Aerated Compositions of Working Examples WE_570, WE_770, WE_970 and also the Non-working Examples 3B, 3D, and 3E.

The results show that the Working Examples prepared from emulsifiers according to the invention were stable not just at 22°C but also at the higher storage test temperature of 35°C for a period of 28 days.

In contrast, the emulsifiers S1170 (Sample 3B), CITREM (Sample 3D), and PGE 55 (Sample 3E) (which fall outside the claimed invention) did not deliver a stable foam at either storage temperature for a period of 28 days.

In addition, samples comprising S370 (Sample 3A) and S1670 (Sample 3C) (which also both fall outside the claimed invention) are not shown in Figure 3 because they could not be aerated to even create an AAS and therefore no EAC's could be tested.

**EXAMPLE 4** - **EFFECT OF SOLUBLE SUGAR CONCENTRATION**

In this experiment, various concentrations of soluble sugar were assessed for their ability to provide a stable composition.

**Table 4 - Formulation and processing of samples of Example 4**

| | | Sample | | |
|---|---|---|---|---|
| | | **4A** | **4_1** | **4_2** |
| | | Ingredient (wt%) | | |
| Aqueous Solution (AS) | Sucrose | 45 | 50 | 68 |
| | S-970 | 2 | 2 | 2 |
| | CaCl$_2$ (dihydrate) | 0.049 (4.0 mM) | 0.049 (4.1 mM) | 0.049 (4.4 mM) |
| | Water | to 100 | to 100 | to 100 |
| | | | | |
| Process for aerating AS | Time (min) | 60 | 60 | 30 |
| | Temperature of circulating fluid (°C) | 40 | 40 | 40 |
| | | | | |
| Aerated Aqueous Solution (AAS) | Overrun of AS (%) | 780 | 780 | 304 |
| | D3,2 droplet size (um) | 20.5 | 16.2 | 5.8 |
| | | | | |
| Remaining Ingredients (RI) | Sucrose | 12.9 | 10.2 | 0.5 |
| | CaCl$_2$ (dihydrate) | 0.049 (3.3 mM) | 0.049 (3.3 mM) | 0.049 (3.3 mM) |
| | Xanthan gum | 0.8 | 0.8 | 0.78 |
| | Water | to 100 | to 100 | to 100 |
| | | | | |
| Edible Aerated Composition (EAC) | Proportion AAS (wt%) | 37.7 | 37.1 | 36.6 |
| | Proportion RI (wt%) | 62.3 | 62.9 | 63.4 |
| | | Ingredient (wt%) | | |
| | Sucrose | 25 | 25 | 25 |
| | S-970 | 0.75 | 0.74 | 0.73 |
| | CaCl$_2$ (dihydrate) | 0.049 (3.7 mM) | 0.049 (3.7 mM) | 0.049 (3.7 mM) |
| | Xanthan gum | 0.5 | 0.5 | 0.5 |
| | Water | to 100 | to 100 | to 100 |
| | | | | |
| | Overrun | 252 | 274 | 110 |
| | D3,2 droplet size (um) after 28d storage at 35°C | 20.5 | 17.1 | 5.7 |

Stability test

Figure 4 shows the stability of the Edible Aerated Compositions of Samples 4A, 4_1, and 4_2. The results show that Edible Aerated Compositions prepared from Aqueous Solutions with soluble sugar levels less than 50 wt% (Sample 4A) were not stable whereas soluble sugar levels from 50wt% and higher (Samples 4_1 & 4_2) were stable not just at 22°C but also at the higher storage test temperature of 35°C for a period of 28 days.

## EXAMPLE 5 - EFFECT OF EMULSIFIER CONCENTRATION

In this experiment, various concentrations of emulsifier were assessed for their ability to provide a stable composition.

**Table 5 - Formulation and processing of samples of Example 5**

| | | Samples | | |
|---|---|---|---|---|
| | | 5A | 5_1 | 5_2 |
| | | Ingredient (wt%) | | |
| **Aqueous Solution (AS)** | Sucrose | 62 | 62 | 62 |
| | S-970 | 1 | 1.25 | 5 |
| | CaCl$_2$ (dihydrate) | 0.049 (4.3 mM) | 0.049 (4.3 mM) | 0.049 (4.3 mM) |
| | Water | to 100 | to 100 | to 100 |
| | | | | |
| **Process for aerating AS** | Time (min) | 60 | 75 | 30 |
| | Temperature of circulating fluid (°C) | 40 | 40 | 40 |
| | | | | |
| **Aerated Aqueous Solution (AAS)** | Overrun of AS (%) | 419 | 356 | 388 |
| | D3,2 droplet size (um) | 11.6 | 10.4 | 9.4 |
| | | | | |
| **Remaining Ingredients (RI)** | Sucrose | 6.2 | 8.8 | 3.8 |
| | CaCl$_2$ (dihydrate) | 0.049 (3.3 mM) | 0.049 (3.3 mM) | 0.049 (3.3 mM) |
| | Xanthan gum | 0.75 | 0.72 | 0.79 |
| | Water | to 100 | to 100 | to 100 |
| | | | | |
| **Edible Aerated Composition (EAC)** | Proportion AAS (wt%) | 33.7 | 30.4 | 36.4 |
| | Proportion RI (wt%) | 66.3 | 69.6 | 63.6 |
| | | Ingredient (wt%) | | |
| | Sucrose | 25 | 25 | 25 |
| | S-970 | 0.34 | 0.38 | 1.82 |
| | CaCl$_2$ (dihydrate) | 0.049 (3.7 mM) | 0.049 (3.7 mM) | 0.049 (3.7 mM) |
| | Xanthan gum | 0.5 | 0.5 | 0.5 |
| | Water | to 100 | to 100 | to 100 |
| | | | | |
| | Overrun | 129 | 124 | 138 |
| | D3,2 droplet size (um) after 28d storage at 35°C | 11.5 | 10.4 | n/a |
| | D3,2 droplet size (um) after 56d storage at 35°C | n/a | n/a | 9.2 |

Stability test

Figure 5 shows the stability of the Edible Aerated Compositions of Samples 5A, 5_1, and 5_2. The results show that Edible Aerated Compositions prepared from Aqueous Solutions with emulsifier levels of 1.25wt% or more were stable not just at 22°C but also at the higher storage test temperature of 35°C for a period of 28 days. Additionally, Sample 5_2 was even stable at a storage test temperature of 45°C for an extended period of 56 days (as shown in the image on the right). Samples according to the invention (5_1 & 5_2) also had small air cell size distributions that were retained even after storage.

Upper level of emulsifier concentration

A further experiment was attempted in which the concentration of S-970 in the AS was 10 wt% of the AS. However, this proved to be too viscous to process.

**EXAMPLE 6 - EFFECT OF TIME OF AERATION OF AQUEOUS SOLUTION**

In this experiment, the time for which the Aqueous Solution should be aerated was assessed in relation to the ability to provide a stable edible aerated composition.

**Table 6 - Formulation and processing of samples of Example 6**

|  |  | Sample | | |
|---|---|---|---|---|
|  |  | **6A** | **6_1** | **6_2** |
|  |  | **Ingredient (wt%)** | | |
| **Aqueous Solution (AS)** | Sucrose | 62 | 62 | 62 |
|  | S-970 | 2 | 2 | 2 |
|  | $CaCl_2$ (dihydrate) | 0.049 (4.3 mM) | 0.049 (4.3 mM) | 0.049 (4.3 mM) |
|  | Water | to 100 | to 100 | to 100 |
|  |  |  |  |  |
| **Process for aerating AS** | Time (min) | 15 | 30 | 120 |
|  | Temperature of circulating fluid (°C) | 40 | 40 | 40 |
|  |  |  |  |  |
| **Aerated Aqueous Solution (AAS)** | Overrun of AS (%) | 602 | 492 | 330 |
|  | D3,2 droplet size (um) | 10.2 | 12.8 | 11 |
|  |  |  |  |  |
| **Remaining Ingredients (RI)** | Sucrose | 2.6 | 2.77 | 2.9 |
|  | $CaCl_2$ (dihydrate) | 0.049 (3.3 mM) | 0.049 (3.3 mM) | 0.049 (3.3 mM) |
|  | Xanthan gum | 0.8 | 0.80 | 0.8 |
|  | Water | to 100 | to 100 | to 100 |
|  |  |  |  |  |
| **Edible Aerated Composition (EAC)** | Proportion AAS (wt%) | 37.7 | 37.5 | 37.4 |
|  | Proportion RI (wt%) | 62.3 | 62.5 | 62.6 |

(continued)

|  | | Sample | | |
|---|---|---|---|---|
|  | | 6A | 6_1 | 6_2 |
|  | | Ingredient (wt%) | | |
|  | | Ingredient (wt%) | | |
|  | Sucrose | 25 | 25 | 25 |
|  | S-970 | 0.75 | 0.75 | 0.75 |
|  | $CaCl_2$ (dihydrate) | 0.049 (3.7 mM) | 0.049 (3.7 mM) | 0.049 (3.7 mM) |
|  | Xanthan gum | 0.5 | 0.5 | 0.5 |
|  | Water | to 100 | to 100 | to 100 |
|  |  |  |  |  |
|  | Overrun | 235 | 165 | 118 |
|  | D3,2 droplet size (um) after 28d storage at 35°C | 8.9 | 12.1 | 11.1 |

Stability test

Figure 6 shows that the edible aerated composition of Sample 6A was not stable at the higher storage test temperature of 35°C for a period of 28 days. In contrast, Samples 6_1 (aerated for 30 minutes) and 6_2 (aerated for 120 minutes) were stable for a period of 28 days and retained their small air cell size distribution, even at the higher storage test temperature of 35°C.

## EXAMPLE 7 - STABILITY OF COMPLEX FORMULATIONS

This experiment shows that a more complex formulation in which ice cream ingredients are added to as the Remaining Ingredients to the Aerated Aqueous Solution provides a stable and acceptable product.

**Table 7 - Formulation and processing of sample of Example 7**

|  | | Sample 7_1 |
|---|---|---|
|  | | Ingredient (wt%) |
| **Aqueous Solution (AS)** | Sucrose | 62 |
|  | S-770 | 2 |
|  | $CaCl_2$ (di-hydrate) | 0.088 (7.8 mM) |
|  | Water | to 100 |
|  |  |  |
| **Process for aerating AS** | Time (min) | 70 |
|  | Temperature of circulating fluid (°C) | 40 |
|  |  |  |
| **Aerated Aqueous Solution (AAS)** | Overrun of AAS (%) | 387 |
|  | D3,2 droplet size (um) | 10.4 |
|  |  |  |

(continued)

|  |  | Sample 7_1 |
|---|---|---|
|  |  | Ingredient (wt%) |
| **Remaining Ingredients (RI)** | Sucrose | 3.76 |
|  | $CaCl_2$ (di-hydrate) | 0.088 (6.6 mM) |
|  | Xanthan gum | 0.79 |
|  | Skimmed milk powder | 6.5 |
|  | Coconut Oil | 7.9 |
|  | Water | to 100 |
|  |  |  |
| **Edible Aerated Composition (EAC)** | Proportion AAS (wt%) | 36.5 |
|  | Proportion RI (wt%) | 63.5 |
|  |  | Ingredient (wt%) |
|  | Sucrose | 25 |
|  | S-970 | 0.73 |
|  | $CaCl_2$ (di-hydrate) | 0.088 (6.0 mM) |
|  | Xanthan gum | 0.5 |
|  | Skimmed milk powder | 4.2 |
|  | Coconut Oil | 5 |
|  | Water | to 100 |
|  |  |  |
|  | Overrun | 124 |
|  | D3,2 droplet size (um) after 28d | 7.2 |
|  | storage at 35°C |  |

Stability test

Figure 7a shows that Edible Aerated Compositions of Sample 7_1 were stable and Table 7 shows they retained their small air cell size distribution, even at the higher storage test temperature of 35°C for a period of 28 days, demonstrating stability of a foam with a more complex formulation including additional fat and protein.

Edible Aerated Compositions according to Sample 7_1 were placed into 100ml plastic containers and quiescently frozen in a freezer at -25°C both straight away and after storage at 35°C for a period of 28 days. After freezing, samples were stored at -18°C prior to being subjected to organoleptic assessment, penetrometer testing, and microscopy analysis as described below.

Organoleptic assessment

The sample frozen straight away was tasted and proved to be organoleptically acceptable. The organoleptic assessment was carried out by experienced ice cream testers. The samples were served at -18°C, a temperature at which the sample contained 50wt% ice. Samples were described as a pleasurable and as having a smooth ice cream experience with no perceivable iciness.

Penetrometer test

The resultant frozen confections (frozen both straight away and after storage at 35°C for a period of 28 days) were tested using penetrometry. Penetrometry measurements were done using an Exponent Stable Micro Systems Penetrometer using a 4mm diameter cylindrical probe. The penetrometer was set at -18°C in a nitrogen cooled temperature cabinet with test speed set at 2mm/s, trigger force at 0.5N, and test depth of 10mm. All samples were equilibrated overnight at -18°C in a portable freezer. All measurements were made with the ice creams at -18°C to -19°C. Figure 7b shows that the penetrometry results are almost the same, demonstrating that an equivalent, acceptable frozen confection can be made, even after storage at 35°C for a period of 28 days.

Microstructure analysis

Edible Aerated Compositions according to Sample 7_1 were quiescently frozen both straight away and after storage at 35°C for a period of 28 days. The resultant frozen confections were analysed using scanning electron microscopy. The images obtained are shown in Figure 7c in which:

- The frozen confection prepared straight away is shown on the left, and the frozen confection prepared after storage at 35°C for one month is shown on the right; and
- The top images are lower magnification (x100), and the bottom images are higher magnification (x300).

Analysis of the images shows that:

- The top left image shows dendritic ice crystal growth in the sample frozen straight away which is as expected from quiescent freezing;
- The top right image shows some large ice crystals in the sample frozen after storage at 35°C for a period of 28 days but has fewer dendritic ice crystals. It is therefore expected to be not just organoleptically acceptable but also less icy;
- The bottom left image shows good bubble microstructure in the freshly frozen sample; and
- The bottom right image shows the same good bubble microstructure even after storage at 35°C for a period of 28 days and will therefore have the smooth organoleptic properties observed for the freshly frozen sample on the left. Although some ice crystals are visible, this is not believed to be deleterious to the final product.

Summary

Since the frozen confections prepared both straight away and after storage at 35°C for a period of 28 days had the same indentation force profile (as demonstrated by penetrometry) and similar bubble microstructure (as demonstrated by microscopy) they would therefore have the same organoleptically acceptable properties.

**EXAMPLE 8 - COMPARISON WITH EXAMPLE 1 OF PRIOR ART EP1889544**

Sample 8A was prepared exactly in accordance with the formulation of Example 1 as set out in EP1889544.
The processing conditions at [0031] of EP1889544 specifies a time of 35-80s which, as proven above, will not work. Therefore, the optimal time condition of 90 minutes was used for this Example as this has been proven to work in our invention.
[0150]   [0031] of EP1889544 does not specify the temperature, so it could have been presumed the temperature was room temperature (22°C). However, claim 22 states a temperature range of from 0 to 30°C prior to aeration and therefore this highest temperature was used for this Example 8 because it is closest to the temperature that has been proven to work in our invention.
The formulation and processing conditions of Sample 8A are provided in Table 8.

**Table 8 - Formulation and processing of Sample 8A**

| | | Sample 8A |
|---|---|---|
| | | Ingredient [wt%] |
| Aqueous Solution (AS) | Maltodextrin (DE16-20) | 50 |
| | SSL (Emulsifier) | 2 |
| | Water | to 100 |
| | | |
| Process for aerating AS | Time (min) | 90 |
| | Temperature of circulating fluid (°C) | 30 |

(continued)

|  | | Sample 8A |
| --- | --- | --- |
|  | | Ingredient [wt%] |
|  | | |
| Aerated Aqueous Solution (AAS) | Overrun of AAS (%) | 872 |
| | D3,2 droplet size (um) | 4.9 |
|  | | |
| Remaining Ingredients (RI) | Sugar | 11.6 |
| | Gelatin (200 Bloom) | 2.5 |
| | Starch (Novation 8300) | 0.6 |
| | Whole milk | 60.5 |
| | Cream (40wt% fat) | 18.2 |
| | SMP | 6.6 |
| | Water | to 100 |
|  | | |
| Edible Aerated Composition (EAC) | Proportion AAS (wt%) | 25 |
| | Proportion RI (wt%) | 75 |
| | | Ingredient (wt%) |
| | Maltodextrin (DE16-20) | 12.5 |
| | SSL (Emulsifier) | 0.5 |
| | Sugar | 8.7 |
| | Gelatin (200 Bloom) | 1.88 |
| | Starch (Novation 8300) | 0.45 |
| | Whole milk | 45.38 |
| | Cream (40wt% fat) | 13.65 |
| | SMP | 4.95 |
| | Water | to 100 |
| | | |
| | Overrun | 258 |

Stability test

Figure 8 shows that the Edible Aerated Composition of Sample 8A was not stable at either the 35°C or the lower 22°C storage temperatures after 14 days, consequently D3,2 droplet size (um) after 28 days storage at 35°C is not available because the Sample 8A did not survive under those conditions.

## EXAMPLE 9 - ASSESSMENT OF BUBBLE SIZE DISTRIBUTION

Samples according to WE_770 were prepared as per Table 3.2 above. The Aerated Aqueous Solution was subjected to assessment of bubble size distribution as was the Edible Aerated Composition immediately after preparation and again following 112 days storage at 35°C.

Bubble size distribution was measured using a Malvern Mastersizer 2000, with the rotor speed set to 1750rpm, using the general purpose spherical model for the calculation. The bubble size distributions are shown in Figures 9a, 9b and 9c respectively for the AAS (denoted by 'x'), the EAC immediately after preparation (denoted by 'o') and the EAC following 112 days storage at 35°C (denoted by '+').

The D3,2 for the AAS, the EAC immediately after preparation and the EAC following 112 days storage at 35°C were determined to be 9.4um, 9.8um and 9.1 um respectively demonstrating that the small air cell size distribution was maintained even after very long periods of storage (112 days) at elevated temperature (35°C).

## EXAMPLE 10 - EFFECT OF SALT TYPE ON MICROSTRUCTURE OF AERATED

## AQUEOUS SOLUTION

Samples were prepared containing, 62 wt% Sucrose, 2 wt% S770, and the types of salts shown in Table 10 in the amount required to provide the molarity shown in Table 10. The balance was deionised water to 100 wt%. The Control Sample 10A contained 62 wt% Sucrose, 2 wt% S770, but no salt, and the balance was deionised water to 100 wt%.

Samples were aerated as described above for 40 minutes with the circulating fluid at 20°C. Once aerated, the overrun and $D_{3,2}$ air cell size distribution were determined.

**Table 10 - Concentrations and types of salts tested**

| | Molarity of salt (mM) | | $D_{3,2}$ ($\mu$m) | Overrun (%) |
|---|---|---|---|---|
| **Control Sample 10A** | 0 | | 21.1 | 288 |
| | | | | |
| | **Molarity of salt (mM)** | | **Molarity of salt (mM)** | |
| | **11.7** | **23.4** | **11.7** | **23.4** |
| | $D_{3,2}$ ($\mu$m) | | Overrun (%) | |
| **Sodium Chloride (NaCl)** | 11.9 | 9.7 | 523 | 578 |
| **Calcium Chloride (CaCl$_2$)** | 8.7 | 15.9 | 553 | 420 |
| **Aluminium Chloride (AlCl$_3$)** | 11.8 | 11.8 | 430 | 468 |
| **Sodium Carbonate (Na$_2$CO$_3$)** | 21.3 | 15.1 | 333 | 414 |
| **Sodium Phosphate (Na$_3$PO$_4$)** | 20.3 | 13.6 | 343 | 459 |

The results shown in Table 10 show that addition of salt is beneficial but not essential in terms of delivering a higher overrun compared with the Control Sample 10A. A lower [$D_{3,2}$] air cell size distribution was also observed in the presence of salt. At the lower level of Calcium Chloride (11.7 mM) the highest overrun and lowest bubble size were observed.

## EXAMPLE 11 - COMPOSITION OF THE EMULSIFIERS OF THE PRIOR ART

Emulsifiers SP30, SP50, SP70 and DATEM as listed below were analysed using gas chromatography to determine the mono-, di, tri-, and poly-ester distribution. To determine the stearic : palmitic ratio, alkaline hydrolysis was performed to break the ester bond prior to chromatography analysis.

- Datem was Panodan S Visco-Lo 2000 K-A from Danisco
- Sucrose Esters were SP-30, SP-50, SP-70 from Sisterna

The stearic:palmitic ratio and mono-, di, tri-, and poly-ester distribution of the emulsifiers was calculated as described above under Example 3 and the results are shown in Table 11.

**Table 11 - Properties of Emulsifiers**

| | Emulsifiers | | | |
|---|---|---|---|---|
| | **SP30** | **SP50** | **SP70** | **DATEM** |
| **Stearic:Palmitic fatty acid ratio (w/w)** | 2.12:1 | 2.12:1 | 2.12:1 | 0.72:1 |
| **Mono-esters (wt%)** | 39 | 55 | 71 | - |

(continued)

| | Emulsifiers | | | |
|---|---|---|---|---|
| | SP30 | SP50 | SP70 | DATEM |
| Di-esters (wt%) | 35 | 34 | 23 | - |
| Tri-esters (wt%) | 16 | 7 | 2 | - |
| Poly-esters (wt%) | 8 | 1 | 1 | - |

**Claims**

1. A process for the preparation of an ambient stable edible aerated composition suitable for the production of an aerated frozen confection comprising the steps of

   - providing an aqueous solution comprising

     ∘ water and
     ∘ from 50 to 75 wt% by weight of the aqueous solution of a soluble sugar
     ∘ from 1.25 to 5 wt% by weight of the aqueous solution of an emulsifier wherein the emulsifier comprises

       ▪ saturated stearic and palmitic fatty acids in a w/w ratio of from 1: 1 to 5:1;
       ▪ at most 55 wt % by weight of the emulsifier of mono-esters;
       ▪ from 30 to 35 wt% by weight of the emulsifier of di-esters;
       ▪ from 10 to 25 wt% by weight of the emulsifier tri-esters; and
       ▪ from 4 to 16 wt% by weight of the emulsifier poly-esters

   - then aerating the aqueous solution

     ∘ at a temperature of from 40 to 47°C
     ∘ for a time of from 30 to 120 minutes
     ∘ to an overrun of from 200 to 800%
     ∘ with a bubble size $D_{3,2}$ of from 5 to 25$\mu$m

   - and then combining the resulting aerated aqueous solution with the remaining ingredients of the frozen confection in a w/w ratio of aerated aqueous solution to remaining ingredients of from 20:80 to 35:65 to create the edible aerated composition, the remaining ingredients comprising:

     ∘ from 0.1 to 5 wt% (by weight of the remaining ingredients) of stabilisers;
     ∘ from 0.1 to 20 wt% (by weight of the remaining ingredients) of sugars;
     ∘ from 1 to 10 wt% (by weight of the remaining ingredients) of proteins; and
     ∘ from 2 to 10 wt% (by weight of the remaining ingredients) of fats.

2. A process according to claim 1 wherein the aqueous solution comprises at least 52.5wt% by weight of the aqueous solution of the soluble sugar.

3. A process according to claim 1 or claim 2 wherein the aqueous solution comprises at most 72.5 wt% by weight of the aqueous solution of the soluble sugar.

4. A process according to any of claims 1 to 3 wherein the soluble sugar comprises a sugar selected from the list comprising sucrose, fructose, lactose maltodextrins, corn syrups such as DE28 and DE40, or a combination thereof.

5. A process according to any of claims 1 to 4 wherein the aqueous solution comprises at least 1.3 wt% by weight of the aqueous solution of the emulsifier.

6. A process according to any of claims 1 to 5 wherein the aqueous solution comprises at most 4 wt% by weight of the aqueous solution of the emulsifier.

7. A process according to any of claims 1 to 6 wherein the emulsifier comprises saturated stearic and palmitic fatty acids in a w/w ratio of from 1:1 to 4.5:1.

8. A process according to any of claims 1 to 7 wherein the emulsifier comprises from 25 to 55 wt% by weight of the emulsifier mono-esters.

9. A process according to any of claims 1 to 8 wherein the emulsifier comprises from 30 to 34 wt% by weight of the emulsifier di-esters.

10. A process according to any of claims 1 to 9 wherein the emulsifier comprises from 11 to 24 wt% by weight of the emulsifier tri-esters.

11. A process according to any of claims 1 to 10 wherein the emulsifier comprises from 5 to 13 wt% by weight of the emulsifier poly-esters.

12. A process according to any of claims 1 to 11 wherein the aqueous solution is aerated at a temperature of from 41 to 46°C.

13. A process according to any of claims 1 to 12 wherein the aqueous solution is aerated for a time of from 40 to 120 minutes.

14. A process for the production of a frozen confection wherein the ambient stable edible aerated composition produced by the process of any one of claims 1 to 13 is frozen.

15. A process according to claim 14 wherein the aerated composition is quiescently frozen.


**Patentansprüche**

1. Verfahren zur Herstellung einer bei Umgebungsbedingungen stabilen essbaren lufthaltigen Zusammensetzung, die zur Herstellung eines lufthaltigen gefrorenen Konfekts geeignet ist, umfassend die Schritte

- Bereitstellen einer wässrigen Lösung, umfassend

o Wasser und
◦ 50 bis 75 Gew.-%, bezogen auf das Gewicht der wässrigen Lösung, eines löslichen Zuckers
◦ 1,25 bis 5 Gew.-%, bezogen auf das Gewicht der wässrigen Lösung, eines Emulgators, wobei der Emulgator umfasst:

▪ gesättigte Stearin- und Palmitinfettsäuren in einem Gew./Gew.-Verhältnis von 1:1 bis 5:1;
▪ höchstens 55 Gew.-%, bezogen auf das Gewicht des Emulgators, von Monoestern;
▪ 30 bis 35 Gew.-%, bezogen auf das Gewicht des Emulgators, von Diestern;
▪ 10 bis 25 Gew.-%, bezogen auf das Gewicht des Emulgators, von Triestern; und
▪ 4 bis 16 Gew.-%, bezogen auf das Gewicht des Emulgators, von Polyestern

- dann der wässrigen Lösung Luft zuführen

◦ bei einer Temperatur von 40 bis 47 °C
◦ für eine Zeit von 30 bis 120 Minuten
◦ auf einen Lufteinschlag von 200 bis 800 %
◦ mit einer Blasengröße $D_{3,2}$ von 5 bis 25 $\mu$m

- und dann Kombinieren der resultierenden lufthaltigen wässrigen Lösung mit den restlichen Bestandteilen des gefrorenen Konfekts in einem Gew./Gew.-Verhältnis von lufthaltiger wässriger Lösung zu restlichen Bestandteilen von 20:80 bis 35:65, um die essbare lufthaltige Zusammensetzung zu erzeugen, wobei die restlichen Bestandteile umfassen:

◦ 0,1 bis 5 Gew.-% (bezogen auf das Gewicht der restlichen Bestandteile) Stabilisatoren;

○ 0,1 bis 20 Gew.-% (bezogen auf das Gewicht der restlichen Bestandteile) Zucker;
○ 1 bis 10 Gew.-% (bezogen auf das Gewicht der restlichen Bestandteile) Proteine; und
○ 2 bis 10 Gew.-% (bezogen auf das Gewicht der restlichen Bestandteile) Fette.

2. Verfahren nach Anspruch 1, wobei die wässrige Lösung mindestens 52,5 Gew.-%, bezogen auf das Gewicht der wässrigen Lösung, des löslichen Zuckers umfasst.

3. Verfahren nach Anspruch 1 oder Anspruch 2, wobei die wässrige Lösung höchstens 72,5 Gew.-%, bezogen auf das Gewicht der wässrigen Lösung, des löslichen Zuckers umfasst.

4. Verfahren nach irgendeinem der Ansprüche 1 bis 3, wobei der lösliche Zucker einen Zucker umfasst, der ausgewählt ist aus der Liste, die Saccharose, Fructose, Lactose Maltodextrine, Maissirupe, wie z.B. DE28 und DE40, oder eine Kombination davon umfasst.

5. Verfahren nach irgendeinem der Ansprüche 1 bis 4, wobei die wässrige Lösung mindestens 1,3 Gew.-%, bezogen auf das Gewicht der wässrigen Lösung, des Emulgators umfasst.

6. Verfahren nach irgendeinem der Ansprüche 1 bis 5, wobei die wässrige Lösung höchstens 4 Gew.-%, bezogen auf das Gewicht der wässrigen Lösung, des Emulgators umfasst.

7. Verfahren nach irgendeinem der Ansprüche 1 bis 6, wobei der Emulgator gesättigte Stearin- und Palmitinfettsäuren in einem Gew./Gew.-Verhältnis von 1:1 bis 4,5:1 umfasst.

8. Verfahren nach irgendeinem der Ansprüche 1 bis 7, wobei der Emulgator 25 bis 55 Gew.-%, bezogen auf das Gewicht des Emulgators, Monoester umfasst.

9. Verfahren nach irgendeinem der Ansprüche 1 bis 8, wobei der Emulgator 30 bis 34 Gew.-%, bezogen auf das Gewicht des Emulgators, Diester umfasst.

10. Verfahren nach irgendeinem der Ansprüche 1 bis 9, wobei der Emulgator 11 bis 24 Gew.-%, bezogen auf das Gewicht des Emulgators, Triester umfasst.

11. Verfahren nach irgendeinem der Ansprüche 1 bis 10, wobei der Emulgator 5 bis 13 Gew.-%, bezogen auf das Gewicht des Emulgators, Polyester umfasst.

12. Verfahren nach irgendeinem der Ansprüche 1 bis 11, wobei der wässrigen Lösung bei einer Temperatur von 41 bis 46 °C Luft zugeführt wird.

13. Verfahren nach irgendeinem der Ansprüche 1 bis 12, wobei der wässrigen Lösung für eine Zeit von 40 bis 120 Minuten Luft zugeführt wird.

14. Verfahren zur Herstellung eines gefrorenen Konfekts, wobei die bei Umgebungsbedingungen stabile essbare lufthaltige Zusammensetzung, die durch das Verfahren nach irgendeinem der Ansprüche 1 bis 13 hergestellt wird, gefroren wird.

15. Verfahren nach Anspruch 14, wobei die lufthaltige Zusammensetzung bewegungslos gefroren wird.


**Revendications**

1. Procédé pour la préparation d'une composition aérée comestible stable ambiante appropriée pour la production d'une confiserie glacée aérée comprenant les étapes de

- fourniture d'une solution aqueuse comprenant

○ de l'eau et
○ de 50 à 75 % en masse de la solution aqueuse d'un sucre soluble
○ de 1,25 à 5 % en masse de la solution aqueuse d'un émulsifiant dans lequel l'émulsifiant comprend

- des acides gras stéarique et palmitique saturés dans un rapport masse/masse de 1:1 à 5:1 ;
- au plus 55 % en masse de l'émulsifiant de mono-esters ;
- de 30 à 35 % en masse de l'émulsifiant de di-esters ;
- de 10 à 25 % en masse de l'émulsifiant de tri-esters ; et
- de 4 à 16 % en masse de l'émulsifiant de poly-esters

- puis aération de la solution aqueuse

  ◦ à une température de 40 à 47°C
  ◦ sur une durée de 30 à 120 minutes
  ◦ jusqu'à un dépassement de 200 à 800 %
  ◦ avec une dimension de bulle $D_{3,2}$ de 5 à 25 $\mu$m

- et puis combinaison de la solution aqueuse aérée résultante avec les ingrédients restants de la confiserie glacée dans un rapport masse/masse de solution aqueuse aérée aux ingrédients restants de 20:80 à 35:65 pour créer la composition aérée comestible, les ingrédients restants comprenant :

  ◦ de 0,1 à 5 % en masse (en masse des ingrédients restants) de stabilisants ;
  ◦ de 0,1 à 20 % en masse (en masse des ingrédients restants) de sucres ;
  ◦ de 1 à 10 % en masse (en masse des ingrédients restants) de protéines ; et
  ◦ de 2 à 10 % en masse (en masse des ingrédients restants) de graisses.

2. Procédé selon la revendication 1, dans lequel la solution aqueuse comprend au moins 52,5 % en masse de la solution aqueuse du sucre soluble.

3. Procédé selon la revendication 1 ou revendication 2, dans lequel la solution aqueuse comprend au plus 72,5 % en masse de la solution aqueuse du sucre soluble.

4. Procédé selon l'une quelconque des revendications 1 à 3, dans lequel le sucre soluble comprend un sucre choisi dans la liste comprenant le saccharose, le fructose, les lactose maltodextrines, sirops de maïs, tels que DE28 et DE40, ou une combinaison de ceux-ci.

5. Procédé selon l'une quelconque des revendications 1 à 4, dans lequel la solution aqueuse comprend au moins 1,3 % en masse de la solution aqueuse de l'émulsifiant.

6. Procédé selon l'une quelconque des revendications 1 à 5, dans lequel la solution aqueuse comprend au plus 4 % en masse de la solution aqueuse de l'émulsifiant.

7. Procédé selon l'une quelconque des revendications 1 à 6, dans lequel l'émulsifiant comprend des acides gras stéarique et palmitique saturés dans un rapport masse/masse de 1:1 à 4,5:1.

8. Procédé selon l'une quelconque des revendications 1 à 7, dans lequel l'émulsifiant comprend de 25 à 55 % en masse de l'émulsifiant de mono-esters.

9. Procédé selon l'une quelconque des revendications 1 à 8, dans lequel l'émulsifiant comprend de 30 à 34 % en masse de l'émulsifiant de di-esters.

10. Procédé selon l'une quelconque des revendications 1 à 9, dans lequel l'émulsifiant comprend de 11 à 24 % en masse de l'émulsifiant de tri-esters.

11. Procédé selon l'une quelconque des revendications 1 à 10, dans lequel l'émulsifiant comprend de 5 à 13 % en masse de l'émulsifiant de poly-esters.

12. Procédé selon l'une quelconque des revendications 1 à 11, dans lequel la solution aqueuse est aérée à une température de 41 à 46°C.

13. Procédé selon l'une quelconque des revendications 1 à 12, dans lequel la solution aqueuse est aérée sur une durée de 40 à 120 minutes.

14. Procédé pour la production d'une confiserie glacée, dans lequel la composition aérée comestible stable ambiante produite par le procédé selon l'une quelconque des revendications 1 à 13 est glacée.

15. Procédé selon la revendication 14, dans lequel la composition aérée est glacée doucement.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1889544 A
- WO 2017125213 A
- WO 2008110502 A
- US 5486372 A

**Non-patent literature cited in the description**

- **H. GOFF ; R. HARTEL.** Ice Cream
- **C. CLARKE.** The Science of Ice Cream